# EUROPÄISCHE PATENTANMELDUNG

(11) **EP 0 762 258 A2**
(43) Veröffentlichungstag der Anmeldung: **12.03.1997**
(21) Anmeldenummer: 96111433.7
(22) Anmeldetag: 16.07.1996
(51) Int. Cl.: G05D 23/24, G01N 27/12, H05B 1/02

(54) **Schaltungsanordnung zum Ansteuern eines Heizwiderstandes**

(30) Priorität: 30.08.1995 DE 19531786
(71) Anmelder: ROBERT BOSCH GMBH, 70442 Stuttgart (DE)
(72) Erfinder: Hog, Norbert, Dipl.-Ing., 77815 Buehl (DE)

(57) **Zusammenfassung**

Die Erfindung betrifft eine Schaltungsanordnung zum Ansteuern eines Heizwiderstandes, insbesondere eines Luftgütesensors.

Es ist vorgesehen, daß der Heizwiderstand (R_{H}) in einen Spannungsteiler (22) geschaltet ist, und eine sich am Spannungsteiler (22) einstellende temperaturabhängige Istwert-Spannung (U3) zur geregelten getakteten Ansteuerung des Heizwiderstandes (R_{H}) ausgenutzt wird.

## Beschreibung

Die Erfindung betrifft eine Schaltungsanordnung zum Ansteuern eines Heizwiderstandes, insbesondere eines Luftgütesensors.

### Stand der Technik

Es ist bekannt, in vielen Bereichen der Technik sogenannte Luftgütesensoren einzusetzen, die in Abhängigkeit einer bestimmten Konzentration an Schadstoffen in der Luft ein Ausgangssignal bereitstellen, das zur Auslösung verschiedener Funktionen eingesetzt werden kann. So werden beispielsweise in Kraftfahrzeugen Luftgütesensoren eingesetzt, um beim Ansteigen einer Kohlenmonoxid-Konzentration oder Stickoxid-Konzentration eine Lüfterklappe des Kraftfahrzeugs umzuschalten, so daß in der Fahrzeugkabine die Lüftung von Frischluftzufuhr auf Umluft umgeschaltet wird.

Bekannterweise besitzen die Luftgütesensoren einen Widerstand, der seinen Widerstandswert in Abhängigkeit der Konzentration der Schadstoffe ändert. Um die Empfindlichkeit dieser konzentrationsabhängigen Widerstände zu erhöhen, ist es bekannt, diese zu beheizen. Durch die Beheizung der Sensorwiderstände kann schon eine geringfügige Änderung einer Schadstoffkonzentration detektiert werden. Zum Heizen der Sensorwiderstände ist es bekannt, diesen einen Heizwiderstand zuzuordnen, der mit einer Heizspannung beaufschlagbar ist. Um das Sensorelement auf eine bestimmte Temperatur zu halten, ist es bekannt, diesen einen Temperatursensor zuzuordnen, der die Ein- beziehungsweise Ausschaltung der Heizspannung auslöst. Darüber hinaus ist es bekannt, den Heizwiderstand über eine Zeitsteuerung für eine fest vorgegebene Zeit abwechselnd mit der Heizspannung zu beaufschlagen. In beiden Fällen ist die Ansteuerung des Heizwiderstandes mit einem relativ hohen Schaltungsaufwand verbunden.

### Vorteile der Erfindung

Die erfindungsgemäße Schaltungsanordnung mit den im Anspruch 1 genannten Merkmalen bietet demgegenüber den Vorteil, mit einem sehr geringen Schaltungsaufwand eine effektive Ansteuerung eines Heizwiderstandes zu realisieren. Dadurch, daß der Heizwiderstand in einem Spannungsteiler geschaltet ist und eine sich an diesem Spannungsteiler einstellende temperaturabhängige Istwert-Spannung zur geregelten getakteten Ansteuerung des Heizwiderstandes ausgenutzt wird, ist es vorteilhaft möglich, ein Tastverhältnis der Heizspannungstaktung in Abhängigkeit der tatsächlichen Ist-Situation zu regeln. Das Tastverhältnis zwischen Heizzeit und Abkühlzeit kann so optimiert werden, um die zur Verfügung stehende Meßzeit des Sensorelementes maximal auszunutzen. Die Aufheizzeit des Heizwiderstandes kann hierbei im Verhältnis zur Abkühlzeit des Heizwiderstandes verringert werden. Das Verhältnis von Aufheizzeit zu Abkühlzeit wird mittels der geregelten getakteten Ansteuerung während des bestimmungsgemäßen Einsatzes des Heizwiderstandes in vorteilhafter Weise den tatsächlichen Gegebenheiten laufend angepaßt.

Vorteilhafte Ausgestaltungen der Erfindung ergeben sich aus den in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: eine Schaltungsanordnung zum Ansteuern eines Heizwiderstandes;
- Figur 2: eine erste Kennlinie der Schaltungsanordnung gemaß Figur 1;
- Figur 3: eine zweite Kennlinie der Schaltungsanordnung gemäß Figur 1 und
- Figur 4: eine Schaltungsanordnung zum Ansteuern eines Heizwiderstandes in einer zweiten Ausführungsvariante.

### Beschreibung der Ausführungsbeispiele

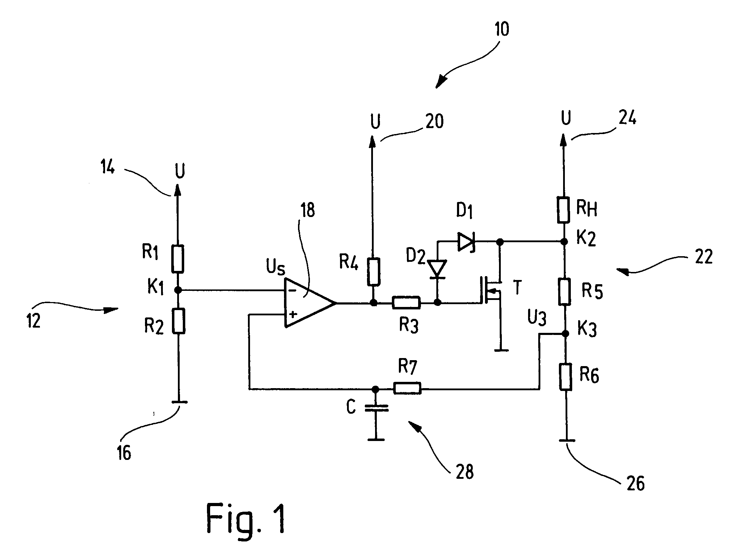

In der Figur 1 ist eine allgemein mit 10 bezeichnete Schaltungsanordnung zum Ansteuern eines Heizwiderstandes R_{H} gezeigt. Die Schaltungsanordnung 10 weist einen ersten Spannungsteiler 12 auf, der aus einer Reihenschaltung der Widerstände R1 und R2 besteht. Der Spannungsteiler 12 ist zwischen den Anschlußklemmen 14 beziehungsweise 16 einer Gleichspannungsquelle geschaltet. Ein zwischen den Widerständen R1 und R2 liegender Knoten K1 ist mit dem invertierenden Eingang eines Komparators 18 verbunden. Der Ausgang des Komparators 18 ist über einen Widerstand R3 mit dem Gate eines MOSFET-Transistors T verbunden. Der MOSFET-Transistor T ist hier als n-Kanaltransistor ausgeführt. Der Ausgang des Komparators 18 ist weiterhin über einen Widerstand R4 mit einer Anschlußklemme 20 verbunden, an der das Betriebsspannungspotential der Anschlußklemmen 14 anliegt. Der Heizwiderstand R_{H} ist Bestandteil eines zweiten Spannungsteilers 22, der aus der Reihenschaltung der Widerstände R_{H} sowie R5 und R6 besteht. Ein zwischen dem Heizwiderstand R_{H} und dem Widerstand R5 liegender Knoten K2 ist mit dem Drain-Anschluß des Transistors T verbunden. Der Source-Anschluß des Transistors T liegt an Ground. Die Reihenschaltung der Widerstände RH, R5 und R6 ist mit ihren äußeren Anschlußklemmen 24 und 26 ebenfalls mit einer Gleichspannungsquelle verbunden. An den Anschlußklemmen 14 und 24 liegt ein gleiches Spannungspotential an. Ein zwischen den Widerständen R5 und R6 liegender Knoten K3 ist über ein RC-Glied 28, das aus einem Widerstand R7 und einer Kapazität C besteht, mit dem nicht invertierenden Eingang des Komparators 18 verbunden. Dem Transistor T sind weiterhin Dioden D1 und D2 als Schutzdioden zugeordnet.

Die in Figur 1 gezeigte Schaltungsanordnung 10 übt folgende Funktion aus:

Bei zwischen den Anschlußklemmen 14 und 16 anliegender Betriebsspannung U wird über den Spannungsteiler 12 eine Sollwertspannung U_{S} eingestellt, die am invertierenden Eingang des Komparators 18 anliegt und somit dessen Schaltschwelle festlegt. Der Spannungsteiler 22 der Widerstände R_{H}, R5 und R6 liegt ebenfalls an der Betriebsspannung U, so daß sich aufgrund der Größe der Widerstände R_{H}, R5 und R6 an den Knotenpunkten K2 und K3 bestimmte Spannungswerte einstellen. Da der Heizwiderstand R_{H} einen Widerstand mit positivem Temperaturkoeffizienten aufweist, das heißt, dieser mit steigender Temperatur seinen Widerstandswert erhöht, beispielsweise von 5 Ω bei Raumtemperatur auf ca. 12 Ω bei 300 °C, bildet der Heizwiderstand R_{H} mit der Reihenschaltung der Widerstände R5 und R6 einen Spannungsteiler, wobei der Spannungswert am Knoten K2 entsprechend des sich einstellenden Widerstandswertes des Heizwiderstandes R_{H} floatet. Bei nicht eingeschaltetem Heizwiderstand R_{H} besitzt dieser ein definiertes Widerstandsverhältnis zu der Reihenschaltung der Widerstände R5 und R6, so daß aufgrund der bekannten Größe der Widerstände R5 und R6 über diese eine definierte Spannung abfällt. Aufgrund des von den Widerständen R5 und R6 gebildeten festen Spannungsteilers liegt an dem Knoten K3 eine Spannung U3 an, die von den Widerstandsverhältnissen des gesamten Spannungsteilers 22 abhängig ist. Die Spannung U3 liegt über das RC-Glied 28 am nicht invertierenden Eingang des Komparators 18 an und bildet somit eine Istwert-Spannung für den Komparator 18.

Durch die Aufteilung des zwischen dem Knotenpunkt K2 und der Anschlußklemme 26 liegenden Widerstandes auf die Reihenschaltung der Widerstände R5 und R6 ist es vorteilhaft möglich, eine sich beim - noch zu erläuternden - Einschalten des Heizwiderstandes R_{H} ergebende Verlustleistung auf zwei Widerstände zu verteilen, die preiswerter sind als ein entsprechend größerer Widerstand. Darüber hinaus ist es zur Ansteuerung des Komparators 18 notwendig, eine Spannung U3 als Istwert-Spannung bereitzustellen, die innerhalb des Common-Mode-Range des Komparators 18 liegt. Da der Widerstand des Heizwiderstandes R_{H} relativ niederohmig ist, liegt die über der Reihenschaltung der Widerstände R5 und R6 abfallende Spannung knapp unterhalb der Betriebsspannung U, jedoch noch nicht im Arbeitsbereich des Komparators 18. Mittels der Reihenschaltung der Widerstände R5 und R6 wird diese Spannung nunmehr in einen Wert aufgeteilt, der vom Komparator 18 problemlos verarbeitet werden kann.

Überschreitet nunmehr die Istwert-Spannung U3 die Schaltschwelle des Komparators 18, wird am Ausgang des Komparators 18 ein digitales Schaltsignal bereitgestellt, das über die Widerstände R4 und R3 das Gate des Transistors T mit der Betriebsspannung U verbindet oder von dieser trennt. Der Widerstand R3 dient hierbei als Strombegrenzungswiderstand. Wird der Transistor T über den Komparator 18 eingeschaltet, wird der Heizwiderstand R_{H} über den Knoten K2 und den Transistor T direkt an die Betriebsspannung U gelegt. Somit ergibt sich, daß ein Einschalten des Heizwiderstandes R_{H} über die Istwert-Spannung U3 geregelt wird. Entsprechend der sich einstellenden Istwert-Spannung U3 ergibt sich eine geregelte Taktung der Ansteuerung des Heizwiderstandes R_{H}, das heißt, das Festlegen der Aufheizzeit und der Abkühlzeit des Heizwiderstandes R_{H}.

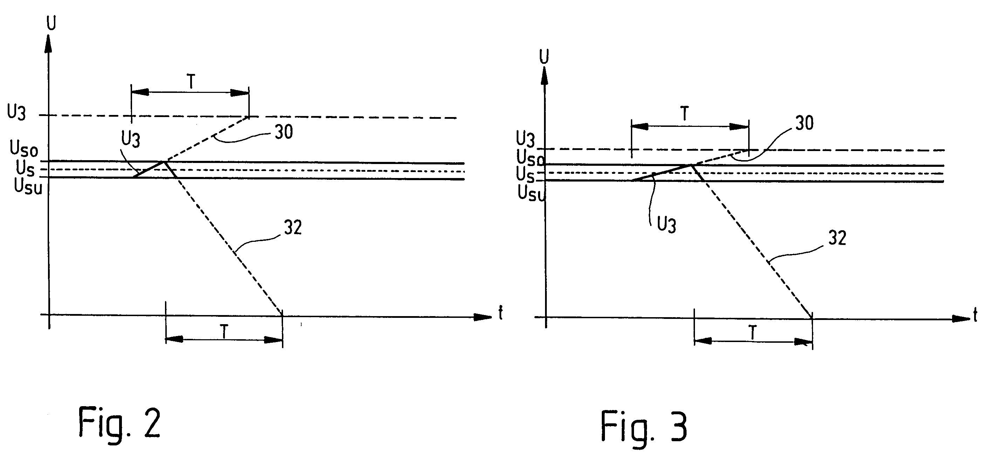

Anhand der in den Figuren 2 und 3 dargestellten Kennlinien der Spannung U über der Zeit t wird das Regelverhalten der Schaltungsanordnung 10 verdeutlicht. Figur 2 zeigt die Kennlinie für einen kalten Heizwiderstand R_{H}. Die obere Kennlinie stellt die sich am Knotenpunkt K3 einstellende Istwert-Spannung U3 dar. Weiterhin ist mit U_{S} die sich aufgrund der Sollwert-Spannung U_{S} ergebende Schaltschwelle des Komparators 18 aufgetragen. Der Schaltschwelle U_{S} ist eine untere Schwellwertspannung U_{SU} und eine obere Schwellwertspannung U_{SO} zugeordnet, die sich aus der Kennlinie des Komparators 18 ergeben. Wird die Schaltungsanordnung 10 mit der Betriebsspannung U verbunden, fällt über den Widerstand R6 die Istwert-Spannung U3 ab. Der Kondensator C des RC-Gliedes 28 lädt sich nunmehr auf die Istwert-Spannung U3 auf. Die Steilheit des Anstieges der Istwert-Spannung U3 an dem Kondensator C richtet sich nach der Zeitkonstante T des RC-Gliedes 28. Entsprechend der mit der Linie 30 eingetragenen Tangente würde demnach der Kondensator C nach dem Ablauf der Zeitspanne T die Istwert-Spannung U3 erreichen, das heißt, auf diese aufgeladen sein. Entsprechend der gewählten Zeitkonstante T des RC-Gliedes 28 wird das Aufladen des Kondensators C entsprechend schneller oder langsamer erfolgen.

Nachdem jedoch die Spannung U₃ am Kondensator C die obere Schwellwertspannung U_{SO} erreicht, schaltet der Komparator 18 den Transistor T und damit den Heizwiderstand R_{H} ein. Ab diesem Zeitpunkt will der Kondensator C sich entsprechend der mit 32 eingezeichneten Linie auf einen Spannungswert von 0 Volt entladen. Da die Spannungsdifferenz zwischen der Schwellspannung U_{S} des Komparators 18 und dem Nullpunkt größer ist als die Spannungsdifferenz zwischen der Schwellspannung U_{S} und der Istwert-Spanung U3, ist die Steilheit der Linie 32 größer, das heißt, die Spannung am Kondensator C fällt schneller ab, so daß die Schwellspannung U_{S} des Komparators 18 schneller von der oberen Schwellwertspannung U_{SO} auf die untere Schwellwertspannung U_{SU} abfällt, als sie von der unteren Schwellwertspannung U_{SU} auf die obere Schwellwertspannung U_{SO} ansteigt. Mit Erreichen der unteren Schwellwertspannung U_{SU} wird der am Ausgang des Komparators 18 anliegende Ansteuerimpuls für den Transistor T zurückgenommen, so daß der Transistor T ausschaltet. Das RC-Glied 28 gewährleistet also, daß die Istwert-Spannung U3 während der Zeit, in der der Heizwiderstand R_{H} über den Transistor T eingeschaltet ist, und der Knotenpunkt K3 ein Potential von 0 Volt aufweist, trotzdem kurzfristig stabil am nicht invertierenden Eingang des Komparators 18 anliegt und während dieser Zeit am Ausgang des Komparators 18 das Ansteuersignal für den Transistor T "high" ist. Über die Zeitkonstante T des RC-Gliedes 28 kann somit das Verhältnis von Aufheizzeit zu Abkühlzeit für den Heizwiderstand R_{H} eingestellt werden.

Anhand der in Figur 3 dargestellten Kennlinie für eine warme Heizung wird deutlich, daß sich die Istwert-Spannung U3 gegenüber der Istwert-Spannung U3 bei einer kalten Heizung verringert. Dies ergibt sich aufgrund der Tatsache, daß der Heizwiderstand R_{H} der Bestandteil des Spannungsteilers 22 ist, im warmen Zustand aufgrund seines positiven Temperaturkoeffizienten einen höheren Widerstand besitzt, so daß die Einstellung des Spannungsteilers 22 sich in der Art ändert, daß die Istwert-Spannung U3 sinkt. Hieraus resultiert, daß die Spannungsdifferenz zwischen der Istwert-Spannung U3 und der Schwellspannung U_{S} des Komparators 18 geringer ausfällt. Aufgrund der feststehenden Zeitkonstante T des RC-Gliedes 28 wird somit die Steilheit der Linie 30, die das Aufladen des Kondensators C von der unteren Schwellwertspannung U_{SU} zu der oberen Schwellwertspannung U_{SO} charakterisiert, flacher. Da die Zeitspanne des Anstieges der am nichtinvertierenden Eingang des Komparators 18 anliegenden Istwert-Spannung U3 von der unteren Schwellwertspannung U_{SU} bis zum Erreichen der oberen Schwellwertspannung U_{SO} die Abkühlzeit des Heizwiderstandes R_{H} ergibt, erhöht sich diese gegenüber einer kalten Heizung. Nachdem die Istwert-Spannung U3 am nicht invertierenden Eingang des Komparators 18 die obere Schwellwertspannung U_{SO} erreicht hat, wird über den Transistor T der Heizwiderstand R_{H} zugeschaltet, während sich gleichzeitig der Kondensator C auf eine Spannung von 0 Volt entladen will. Aufgrund der gleichgebliebenen Spannungsdifferenz zwischen der Schwellspannung U_{S} des Komparators 18 und dem Nullwert, hat sich an der Steilheit der Linie 32, die das Entladen des Kondensators C entsprechend der Zeitkonstante T des RC-Gliedes 28 symbolisiert, nichts geändert. Hierdurch wird erreicht, daß die Aufheizzeit des Heizwiderstandes R_{H} gegenüber der kalten Heizung bei der warnen Heizung annähernd gleich bleibt, während sich das Verhältnis der Aufheizzeit zu der Abkühlzeit bei einer warmen Heizung verringert.

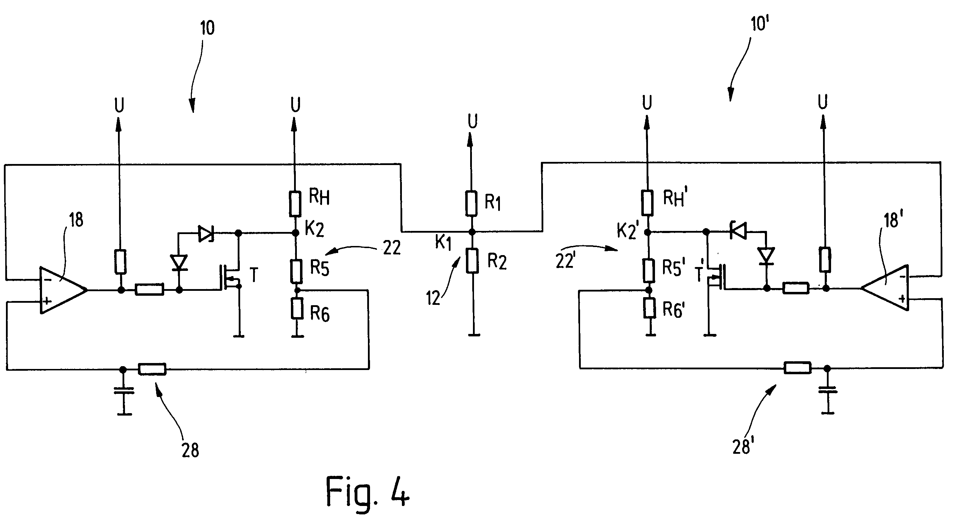

In der Figur 4 ist eine bevorzugte Verschaltung der in den Figuren 1 bis 3 erläuterten Schaltungsanordnung 10 gezeigt. Da bekanntermaßen die Luftgütesensoren zwei Sensorelemente aufweisen, von denen eines beispielsweise die Kohlenmonoxid-Konzentration und das andere beispielsweise die Stickoxid-Konzentration der Luft detektiert, und beide Sensorwiderstände zum Erhöhen ihrer Empfindlichkeit beheizt werden, kann durch eine einfache Spiegelung der Schaltungsanordnung 10 zu dem Spannungsteiler 12 das heißt, diesem ist eine weitere mit der Schaltungsanordnung 10 identische Schaltungsanordnung 10' zugeordnet, ein geregeltes getaktetes Ansteuern der Heizwiderstände R_{H} beziehungsweise R_{H'} erfolgen. Die Sollwertspannung U_{S} für beide Schaltungsanordnungen 10 beziehungsweise 10' wird hier über den Spannungsteiler 12 eingestellt. Somit ergibt sich ein einfacher Aufbau für eine duale Heizungsregelung.

Der in den Figuren 1 bis 4 gezeigte Schaltungsaufbau ist lediglich beispielhaft. So ist es selbstverständlich möglich, anstelle eines MOSFET-Transistors T als Schaltmittel auch Bipolar-Transistoren einzusetzen. Die weiteren Schaltungsbestandteile können ebenfalls durch andere geeignete Schaltungen ersetzt werden, die ein geregeltes getaktetes Ansteuern der Heizwiderstände R_{H} beziehungsweise R_{H'} gestatten.

## Patentansprüche

1. Schaltungsanordnung zum Ansteuern eines Heizwiderstandes, insbesondere eines Luftgütesensors, **dadurch gekennzeichnet**, daß der Heizwiderstand (R_{H}) in einen Spannungsteiler (22) geschaltet ist, und eine sich am Spannungsteiler (22) einstellende temperaturabhängige Istwert-Spannung (U3) zur geregelten getakteten Ansteuerung des Heizwiderstandes (R_{H}) ausgenutzt wird.

2. Schaltungsanordnung nach Anspruch 1, **dadurch gekennzeichnet**, daß die Istwert-Spannung (U3) an einem Knotenpunkt (K3) des Spannungsteilers (22) abgegriffen und über einen Komparator (18) mit einer Sollwertspannung (U_{S}) verglichen wird und der Komparator (18) ein Ansteuersignal für ein Schaltmittel zum Ansteuern des Heizwiderstandes (R_{H}) bereitstellt.

3. Schaltungsanordnung nach einem der vorhergehenden Ansprüche, **dadurch gekennzeichnet**, daß der Knotenpunkt (K3) über ein RC-Glied (28) mit bekannter konstanter Zeitkonstante (T) mit dem nicht invertierenden Eingang des Komparators (18) verbunden ist.

4. Schaltungsanordnung nach einem der vorhergehenden Ansprüche, **dadurch gekennzeichnet**, daß der invertierende Eingang des Komparators (18) mit einem eine Sollwertspannung (U_{S}) bereitstellenden Spannungsteiler (12) verbunden ist.

5. Schaltungsanordnung nach einem der vorhergehenden Ansprüche, **dadurch gekennzeichnet**, daß sich die Frequenz des Taktreglers durch Änderung der Ein- und Auschaltzeiten selbst einstellt (Freilaufender Oszillator).

6. Schaltungsanordnung nach einem der vorhergehenden Ansprüche, **dadurch gekennzeichnet**, daß der Spannungsteiler (22) aus einer Reihenschaltung des Heizwiderstandes (R_{H}) und von Widerständen (R5, R6) besteht, wobei der Knoten (K3) zwischen den Widerständen (R5, R6) liegt.

7. Schaltungsanordnung nach einem der vorhergehenden Ansprüche, **dadurch gekennzeichnet**, daß zur Ausbildung einer dualen Heizungsregelung für zwei Heizwiderstände (R_{H}, R_{H}') eine zur Schaltungsanordnung (10) identische Schaltungsanordnung (10') an den Spannungsteiler (12) zur gemeinsamen Bereitstellung einer Sollwertspannung (U_{S}) geschaltet ist.
